# EUROPÄISCHE PATENTANMELDUNG

(11) **EP 4 116 141 A1**
(43) Veröffentlichungstag der Anmeldung: **11.01.2023**
(21) Anmeldenummer: 22182549.0
(22) Anmeldetag: 01.07.2022
(51) Int. Cl.: B60L 53/22, B60L 53/67, H02M 7/219

(54) **VERSORGUNGSSTATION**

(30) Priorität: 05.07.2021 DE 102021117329
(71) Anmelder: Compleo Charging Solutions AG, 44309 Dortmund (DE)
(72) Erfinder: Turki, Faical, 59174 Kamen (DE)
(74) Vertreter: Wickord, Wiro

(57) **Zusammenfassung**

Die Erfindung betrifft eine Versorgungsstation zur Bereitstellung elektrischer Energie für elektrisch betreibbare Fahrzeuge umfassend eine Mehrzahl von Ladepunkten (5, 6) und einen Gleichspannungswandler mit einem Transformatorsystem (9) mit einem Transformator zur galvanischen Trennung einer Primärseite (1) des Gleichspannungswandlers von einer Sekundärseite (2) desselben, wobei das Transformatorsystem (9) primärseitig eine erste Eingangswicklung (90) vorsieht, die von einem ersten Wechselrichter (10) gespeist ist, wobei das Transformatorsystem (9) sekundärseitig eine erste Ausgangswicklung (96) und eine zweite Ausgangswicklung (97) vorsieht, wobei die erste Ausgangswicklung (96) einem ersten Ladepunkt (5) und die zweite Ausgangswicklung (97) einem zweiten Ladepunkt (6) zugeordnet sind und wobei zum Verbinden der ersten Ausgangswicklung (96) mit dem ersten Ladepunkt (5) eine erste Brückenschaltung (50) und zum Verbinden der zweiten Ausgangswicklung (97) mit dem zweiten Ladepunkt (6) eine zweite Brückenschaltung (70) vorgesehen sind mit jeweils einem ersten Sekundärbrückenzweig (51, 71) und einem zweiten Sekundärbrückenzweig (55, 75), wobei jeder erste Sekundärbrückenzweig (51, 71) zwei in Reihe verschaltete Halbleiterschaltelemente (52, 53, 72, 73) und jeder zweite Sekundärbrückenzweig (55, 75) zwei in Reihe verschaltete Halbleiterbauelemente (56, 57, 76, 77) vorsieht und wobei die erste Ausgangswicklung (96) mit einem Mittelpunkt (54) des ersten Sekundärbrückenzweigs (51) und einem Mittelpunkt (58) des zweiten Sekundärbrückenzweigs (55) der ersten Brückenschaltung (50) und die zweite Ausgangswicklung (97) mit einem Mittelpunkt (74) des ersten Sekundärbrückenzweigs (71) und einem Mittelpunkt (78) des zweiten Sekundärbrückenzweigs (75) der zweiten Brückenschaltung (70) verbunden sind.

## Beschreibung

Die Erfindung betrifft eine Versorgungsstation zur Bereitstellung elektrischer Energie für elektrisch betreibbare Fahrzeuge mit einer Mehrzahl von Ladepunkten und einem Gleichspannungswandler, der ein Transformatorsystem zur galvanischen Trennung einer Primärseite des Gleichspannungswandlers von einer Sekundärseite desselben vorsieht.

Im Stand der Technik sind Versorgungsstationen mit einer Mehrzahl von Ladepunkten bekannt, bei denen an den verschiedenen Ladepunkten unterschiedliche Leistungen bereitgestellt werden können. Für die Versorgungsstationen ist hierbei eine maximale Grenzladeleistung spezifiziert, die aufgeteilt auf die verschiedenen Ladepunkte verschiedenen Fahrzeugen angeboten werden kann. Die Aufteilung der Leistung auf die verschiedenen Ladepunkte erfolgt dabei gestuft. Die Versorgungsstation sieht hierzu eine Mehrzahl von Leistungsmodulen vor, welche jeweils für sich eine bauartbedingt spezifizierte maximale Modulleistung bereitstellen können. Die Summe der Modulleistung aller Module entspricht der Grenzladeleistung der Versorgungsstation.

Die Lademodule können nun variabel verschaltet und bedarfsgerecht unterschiedlichen Ladepunkten der Versorgungsstation zugeordnet werden. Jedoch ist es so, dass ein Lademodul stets nur einem Ladepunkt zugeordnet werden kann mit der Folge, dass die an einem Ladepunkt bereitgestellte Leistung nur stufenweise variiert werden kann, nämlich entsprechend der Modulleistungen der Lademodule. Sofern an einem Ladepunkt seitens des elektrisch betreibbaren Fahrzeugs weniger Leistung abgerufen wird, als von den zugeordneten Lademodulen in Summe bereitgestellt werden kann, kann das verbleibende Leistungsangebot dieser Lademodule keinem anderen Ladepunkt zugängig gemacht werden.

Die im Stand der Technik bekannte Lösung erlaubt eine teilvariable Zuordnung beziehungsweise Verteilung der Grenzladeleistung der Versorgungsstation auf verschiedene Ladepunkte. Das Konzept der Lademodule ist jedoch aufgrund der umfangreichen Hardware aufwendig und teuer. Neben den Lademodulen ist auch eine beispielsweise matrixartig ausgebildete Schaltungsperipherie erforderlich, über die die Lademodule variabel verschiedenen Ladepunkten zugeordnet werden können. Zudem ist die Hardware schwer und ihr Bauraumbedarf groß. Überdies kann die Leistung nur stufenweise auf die verschiedenen Ladepunkte aufgeteilt werden. Verteilt sich die von den elektrisch betreibbaren Fahrzeugen abgerufene Leistung ungünstig auf die Ladepunkte der Versorgungsstation, kann der tatsächliche Leistungsbedarf mithin nicht gedeckt werden, obwohl die Versorgungsstation nominell eine ausreichende Grenzladeleistung bereitzustellen in der Lage ist.

Aufgabe der vorliegenden Erfindung ist es demzufolge, eine Versorgungsstation für elektrisch betreibbare Fahrzeuge so fortzubilden, dass eine eingangsseitig zur Verfügung gestellte Ladeleistung variabel auf eine Mehrzahl von Ladepunkten der Versorgungsstation aufgeteilt werden kann.

Zur Lösung der Aufgabe weist die Erfindung die Merkmale des Patentanspruchs 1 auf. Demzufolge umfasst die Versorgungsstation eine Mehrzahl von Ladepunkten und einen Gleichspannungswandler mit einem Transformatorsystem mit mindestens einem Transformator zur galvanischen Trennung einer Primärseite des Gleichspannungswandlers von einer Sekundärseite desselben. Das Transformatorsystem sieht primärseitig eine erste Eingangswicklung vor, die von einem ersten Wechselrichter gespeist wird. Sekundärseitig sieht das Transformatorsystem eine erste Ausgangswicklung und eine zweite Ausgangswicklung vor, wobei die erste Ausgangswicklung einem ersten Ladepunkt und die zweite Ausgangswicklung einem zweiten Ladepunkt der Versorgungsstation zugeordnet sind. Zum Verbinden der ersten Ausgangswicklung mit dem ersten Ladepunkt einerseits und der zweiten Ausgangswicklung mit dem zweiten Ladepunkt andererseits sind eine erste Brückenschaltung und eine zweite Brückenschaltung vorgesehen. Jeweils weisen die Brückenschaltungen einen ersten Sekundärbrückenzweig und einen zweiten Sekundärbrückenzweig auf, wobei jeder erste Sekundärbrückenzweig zwei in Reihe geschaltete Halbleiterschaltelemente und jeder zweite Sekundärbrückenzweig zwei in Reihe verschaltete Halbleiterbauelemente vorsieht. Beispielsweise sind weitere Halbleiterschaltelemente als Halbleiterbauelemente vorgesehen. Die erste Ausgangswicklung des Transformatorsystems ist dabei mit einem Mittelpunkt des ersten Sekundärbrückenzweigs einerseits und einem Mittelpunkt des zweiten Sekundärbrückenzweigs andererseits der ersten Brückenschaltung verbunden. Analog ist die zweite Ausgangswicklung des Transformatorsystems mit einem Mittelpunkt des ersten Sekundärbrückenzweigs einerseits und einem Mittelpunkt des zweiten Sekundärbrückenzweigs andererseits der zweiten Brückenschaltung verbunden.

Der besondere Vorteil der Erfindung besteht darin, dass die erfindungsgemäße Versorgungsstation eine für sie spezifizierte Grenzladeleistung variabel und bedarfsgerecht auf die Mehrzahl ihrer Ladepunkte aufteilen kann. Verantwortlich hierfür ist der Gleichspannungswandler mit dem Transformatorsystem. Er verbindet die Eingangs- beziehungsweise Primärseite mit der Ausgangs-, Lade- beziehungsweise Sekundärseite und verteilt die eingangsseitig bereitgestellte Ladeleistung variabel und bedarfsgerecht auf die verschiedenen Ladepunkte. Der Leistungsbedarf wird dabei seitens der elektrisch betreibbaren Fahrzeuge aufgeprägt.

Da die Versorgungsstation ihre Leistung an den Ladepunkten variabel und nicht gestuft bereitstellen kann, können die Ressourcen optimal auf die Ladepunkte verteilt und ausgenutzt werden. Solange die an der Versorgungsstation insgesamt nachgefragte Ladeleistung geringer ist als die Grenzladeleistung der Versorgungsstation, kann der Ladebedarf unabhängig von der Verteilung auf die Ladepunkte gedeckt werden. Eine lediglich stufenweise Aufteilung der Leistung auf die Ladepunkte wird vermieden.

Die erfindungsgemäße Versorgungsstation verzichtet darüber hinaus auf eine Vielzahl von Leistungsmodulen und die Schaltperipherie. Die Lösung ist daher kostengünstig. Zudem beansprucht sie einen geringeren Bauraum als bekannte, in Bezug auf die Grenzladeleistung gleiche Versorgungsstationen mit variabel verschalteten Lademodulen.

Nach einer bevorzugten Ausführungsform der Erfindung sieht das Transformatorsystem primärseitig mindestens eine zweite Eingangswicklung vor. Beispielsweise kann das Transformatorsystem so aus verschiedenen Quellen gespeist werden. Vorteilhaft kann hierdurch die Versorgungssicherheit erhöht und das Leistungsvermögen der Versorgungsstation verbessert werden.

Nach einer Weiterbildung der Erfindung sind die erste Eingangswicklung und die zweite Eingangswicklung zueinander in Reihe verschaltet und der erste Wechselrichter speist die beiden Eingangswicklungen des Transformatorsystems.

Nach einer alternativen Ausführungsform der Erfindung ist primärseitig ein zweiter Wechselrichter vorgesehen, welche die zweite Eingangswicklung speist. Vorteilhaft wird hierdurch versorgungsseitig eine Redundanz geschaffen, die die Versorgungssicherheit und die Verfügbarkeit der Versorgungsstation weiter erhöht. Jeder einzelne Wechselrichter kann dabei kleiner ausgeführt sein und demzufolge kostengünstiger realisiert werden.

Nach einer Weiterbildung der Erfindung sieht das Transformatorsystem einen einzigen Transformator mit einem gemeinsamen Kern für alle Eingangs- und Ausgangswicklungen vor. Das Transformatorsystem kann insofern unabhängig von der Anzahl der Eingangs- und Ausgangswicklungen mit einem einzigen Transformator sehr kompakt realisiert werden.

Nach einer alternativen Ausführungsform der Erfindung korrespondiert die Anzahl der Eingangswicklungen zu der Anzahl der Ausgangswicklungen und es ist je einer Eingangswicklung und einer Ausgangswicklung ein einzelner Kern zugeordnet. Die einander paarweise zugeordneten Eingangs- und Ausgangswicklungen definieren mit dem ihnen zugeordneten einzelnen Kern insofern je einen Transformator des Transformatorsystems.

Nach einer Weiterbildung der Erfindung sieht wenigstens eine sekundärseitige Brückenschaltung einen dritten Sekundärbrückenzweig mit einem Kondensator vor. Bevorzugt sieht der dritte Sekundärbrückenzweig zwei in Reihe geschaltete Kondensatoren vor und es ist zwischen dem Mittelpunkt des zweiten Sekundärbrückenzweigs und einem Mittelpunkt des dritten Sekundärbrückenzweigs ein Verbindungsleitungsstrang angeordnet mit einem Schaltelement zum wahlweisen Herstellen beziehungsweise Trennen einer elektrisch leitenden Verbindung zwischen diesen Mittelpunkten. Vorteilhaft kann durch das Vorsehen des Verbindungsleitungsstrangs mit dem Schaltelement ein Spannungsniveau an dem der Brückenschaltung zugeordneten Ladepunkt von einem Grundniveau ausgehend erhöht und beispielsweise verdoppelt werden. So können an dem Ladepunkt Fahrzeuge mit unterschiedlichen Ladespannungen geladen werden. Beispielsweise können an dem zugeordneten Ladepunkt bei geöffnetem Schaltelement Spannungen von 200 V bis zirka 750 V und bei geschlossenem Schaltelement von etwa 750 V bis 1.500 V bereitgestellt werden.

Nach einer Weiterbildung der Erfindung sieht der zweite Sekundärbrückenzweig Dioden als Halbleiterbauelemente vor. Vorteilhaft kann die sekundärseitige Brückenschaltung durch das Vorsehen der Dioden als Halbleiterbauelemente in dem zweiten Sekundärbrückenzweig sehr kostengünstig realisiert werden. Auf vergleichsweise teure Halbleiterschaltelemente als Halbleiterbauelemente in dem zweiten Sekundärbrückenzweig kann verzichtet werden.

Eine Versorgungsstation im Sinne der Erfindung kann wahlweise einen unidirektionalen Energiefluss in Richtung eines an die Versorgungsstation angeschlossenen elektrischen Fahrzeugs oder einen bidirektionalen Energiefluss bereitstellen. Sofern die Versorgungsstation einen bidirektionalen Energiefluss ermöglicht, kann Energie an ein an die Versorgungsstation angeschlossenes elektrisch betreibbares Fahrzeug übertragen werden. Ebenso kann eine Rückspeisung von Energie auf die Primärseite beziehungsweise in das Versorgungsnetz erfolgen. Die Rückspeisung kann beispielsweise der Stabilisierung des Versorgungsnetzes dienen oder vorgesehen werden, um in Fällen eines Energieabfalls oder eines anderen Notfalls beim Laden des Fahrzeugs eine Ausgangsspannung der Versorgungsstation an den Ladepunkten innerhalb kurzer Zeit so stark zu reduzieren, dass keine Gefahr für Leib und Leben mehr besteht.

Als elektrisch betreibbare Fahrzeuge im Sinne der Erfindung gelten insbesondere alle Automobile (Pkw, Lkw, Wohnmobile, Zweiräder, Busse, Transporter und andere), Schienenfahrzeuge (insbesondere Lokomotiven), Wasserfahrzeuge (Boote und Schiffe), Luftfahrzeuge und Anhänger (Wohnmobile), mobile Verkaufsstände und andere. Die elektrische Energie kann für Fahrzeuge mit und ohne eigenen Energiespeicher zur Verfügung gestellt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: eine erste Ausführungsform eines Gleichspannungswandlers einer erfindungsgemäßen Versorgungsstation mit einem Eingang und zwei Ladepunkten,
- Fig. 2: eine erste Abwandlung der ersten Ausführungsform des Gleichspannungswandlers nach Fig. 1,
- Fig. 3: eine zweite Abwandlung der ersten Ausführungsform des Gleichspannungswandlers nach Fig. 1,
- Fig. 4: eine zweite Ausführungsform eines Gleichspannungswandlers der Versorgungsstation mit einem Eingang und zwei Ladepunkten,
- Fig. 5: eine Abwandlung der zweiten Ausführungsform des Gleichspannungswandlers nach Fig. 4,
- Fig. 6: eine dritte Ausführungsform eines Gleichspannungswandlers einer Versorgungsstation mit zwei Eingängen und zwei Ladepunkten und
- Fig. 7: eine Abwandlung der dritten Ausführungsform des Gleichspannungswandlers nach Fig. 6.

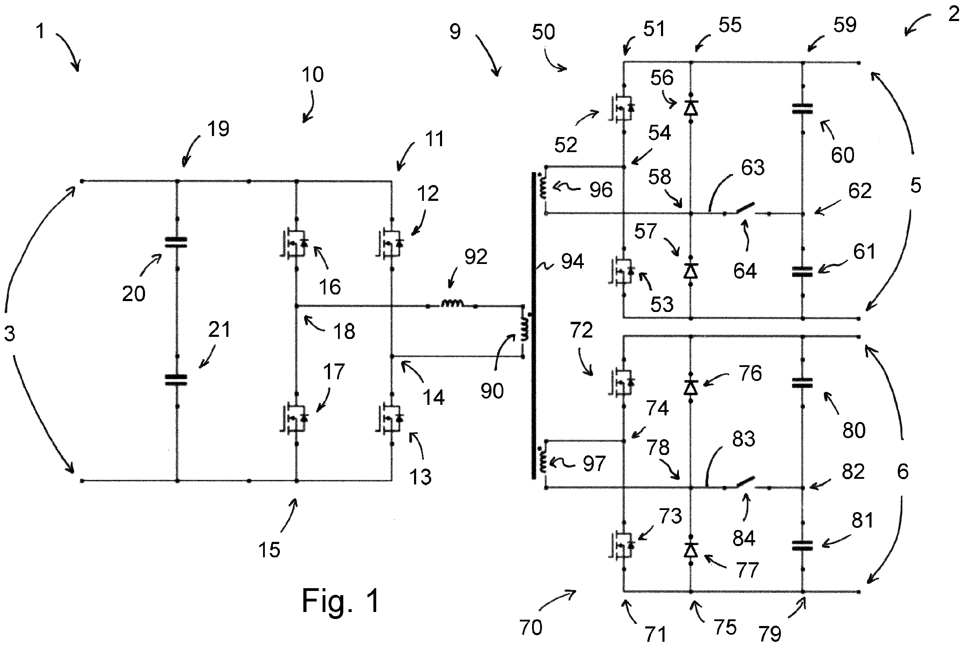

Eine erfindungsgemäße Versorgungsstation mit einem Gleichspannungswandler in einer ersten Ausführungsform nach Fig. 1 sieht ein Transformatorsystem 9 mit einem einzigen Transformator zur galvanischen Trennung einer Primärseite 1 des Gleichspannungswandlers von einer Sekundärseite 2 desselben vor. Dem Transformatorsystem 9 ist primärseitig ein Wechselrichter 10 zugeordnet, der eine erste Eingangswicklung 90 des Transformatorsystems 9 speist. Über einen Eingang 3 ist der Wechselrichter 10 an ein Versorgungsnetz oder eine andere Energiequelle angeschlossen. Das Transformatorsystem 9 sieht überdies eine erste Ausgangswicklung 96 sowie eine zweite Ausgangswicklung 97 vor. Zwei Ladepunkte 5, 6 der Versorgungsstation sind über eine erste Brückenschaltung 50 und eine zweite Brückenschaltung 70 mit der ersten Ausgangswicklung 96 beziehungsweise der zweiten Ausgangswicklung 97 verbunden.

Der primärseitige Wechselrichter 10 sieht vorliegend als Vollbrücke einen ersten Primärbrückenzweig 11 sowie parallel hierzu einen zweiten Primärbrückenzweig 15 mit je zwei in Reihe geschalteten Halbleiterschaltelementen 12, 13, 16, 17 vor. Ein Mittelpunkt 14 des ersten Primärbrückenzweigs 11 und ein Mittelpunkt 18 des zweiten Primärbrückenzweigs 15 sind mit der primärseitigen Eingangswicklung 90 des Transformatorsystems 9 verbunden.

Zudem ist in dem vorliegenden Ausführungsbeispiel der Erfindung primärseitig ein dritter Primärbrückenzweig 19 mit zwei in Reihe geschalteten Kapazitäten 20, 21, die beispielsweise von Kondensatoren gebildet sind, vorgesehen. Der dritte Primärbrückenzweig 19 ist parallel zu dem ersten Primärbrückenzweig 11 und dem zweiten Primärbrückenzweig 15 angeordnet.

Auf der Sekundärseite 2 verbindet die erste Brückenschaltung 50 die erste Ausgangswicklung 96 mit dem ersten Ladepunkt 5. Die erste Brückenschaltung 50 sieht einen ersten Sekundärbrückenzweig 51 mit zwei in Reihe geschalteten Halbleiterschaltelementen 52, 53 vor. Parallel zu dem ersten Sekundärbrückenzweig 51 ist ein zweiter Sekundärbrückenzweig 55 mit zwei Dioden 56, 57 als Halbleiterbauelemente vorgesehen. Die erste Ausgangswicklung 96 des Transformatorsystems 9 ist mit einem Mittelpunkt 54 des ersten Sekundärbrückenzweigs 51 einerseits und einem Mittelpunkt 58 des zweiten Sekundärbrückenzweig 55 andererseits verbunden.

Zusätzlich sieht die erste Brückenschaltung 50 im vorliegenden Ausführungsbeispiel der Erfindung einen dritten Sekundärbrückenzweig 59 vor. Der dritte Sekundärbrückenzweig 59 umfasst zwei Kapazitäten 60, 61, die beispielsweise von Kondensatoren gebildet sind. Zwischen dem Mittelpunkt 58 des zweiten Sekundärbrückenzweigs 55 und einem Mittelpunkt 62 des dritten Sekundärbrückenzweigs 59 ist ein Verbindungsleitungsstrang 63 vorgesehen. Der Verbindungsleitungsstrang 63 sieht ein Schaltelement 64 vor zum wahlweisen Herstellen beziehungsweise Trennen einer elektrisch leitenden Verbindung der Mittelpunkte 58, 62 des zweiten und dritten Sekundärbrückenzweigs 55, 59.

In analoger Weise verbindet die zweite Brückenschaltung 70 die zweite Ausgangswicklung 97 des Transformatorsystems 9 und den zweiten Ladepunkt 6 der Versorgungsstation. Der Aufbau der zweiten Brückenschaltung 70 entspricht dabei dem Aufbau der ersten Brückenschaltung 50. Die zweite Brückenschaltung 70 umfasst wie die erste Brückenschaltung 50 einen ersten Sekundärbrückenzweig 71 mit zwei Halbleiterschaltelementen 72, 73, einen zweiten Sekundärbrückenzweig 75 mit zwei Dioden 76, 77 als Halbleiterbauelemente und einen dritten Sekundärbrückenzweig 79 mit zwei Kapazitäten 80, 81. Die zweite Ausgangswicklung 97 des Transformatorsystems 9 ist mit einem Mittelpunkt 74 des ersten Sekundärbrückenzweigs 71 einerseits und einem Mittelpunkt 78 des zweiten Sekundärbrückenzweigs 75 andererseits verbunden. Darüber hinaus ist eine Verbindungsleitung 83 zwischen dem zweiten Mittelpunkt 78 des zweiten Sekundärbrückenzweigs 75 und einem Mittelpunkt 82 des dritten Sekundärbrückenzweigs 79 vorgesehen. Der Verbindungsleitungsstrang 83 weist wie gehabt ein Schaltelement 84 zum wahlweisen Herstellen beziehungsweise Trennen der Verbindung der Mittelpunkte 78, 82 auf.

Das Transformatorsystem 9 umfasst einen gemeinsamen Kern 94 für die Eingangs- und Ausgangswicklungen 90, 96, 97 sowie primärseitig eine Induktivität, die exemplarisch durch eine Spule 92 gebildet ist. Beispielsweise kann die Induktivität durch eine Streuinduktivität des Transformatorsystems 9 beziehungsweise der Wicklungen 90, 96, 97 definiert oder diskret durch ein separates Bauteil gebildet sein.

Zur Erläuterung der Funktion der erfindungsgemäßen Versorgungsstation sei nachfolgend angenommen, dass an dem ersten Ladepunkt 5 und dem zweiten Ladepunkt 6 jeweils ein elektrisch betreibbares Fahrzeug angeschlossen ist. Weiter sei angenommen, dass die Versorgungsstation eine Grenzladeleistung von 100 kW besitzt und beide Fahrzeuge eine Ladeleistung von 50 kW abrufen. Am Eingang 3 der Versorgungsstation wird dann die Grenzladeleistung von 100 kW bereitgestellt und über das Transformatorsystem 9 gleichmäßig aufgeteilt am ersten Ladepunkt 5 und am zweiten Ladepunkt 6 bereitgestellt. Bekannte Versorgungsstationen im Stand der Technik mit einer Grenzladeleistung von ebenfalls 100 kW und fünf Lademodulen mit je 20 kW haben zwar auch eine nominelle Grenzladeleistung von 100 kW. Sie können jedoch nicht zweimal 50 kW bereitstellen. In der Praxis hilft man sich so, dass einem Ladepunkt drei Lademodule mit zusammen 60 kW und dem zweiten Ladepunkt zwei Lademodule mit zusammen 40 kW zugeordnet werden. Die bekannte Versorgungsstation kann demzufolge die Fahrzeuge zusammen mit nur 90 kW laden: 50 kW an dem einen und 40kW an dem anderen Ladepunkt.

Wenn nun weiter angenommen wird, dass das am zweiten Ladepunkt 6 der erfindungsgemäßen Versorgungsstation angeschlossene zweite elektrisch betreibbare Fahrzeug tatsächlich mit einer Leistung von 60 kW geladen werden könnte, steht bei der gleichzeitigen Ladung des ersten Fahrzeugs mit 50 kW die insgesamt nachgefragte Ladeleistung von 110 kW ausgangsseitig an der Versorgungsstation nicht zur Verfügung. Wird nun jedoch die Ladeleistung, die vom ersten Fahrzeug am ersten Ladepunkt 5 abgerufen wird, auf zum Beispiel 45 kW reduziert, kann über den zweiten Ladepunkt 6 das zweite Fahrzeug nunmehr mit 55 kW geladen werden. Die Leistung wird dann entsprechend der unterschiedlichen Nachfrage über das Transformatorsystem 9 so aufgeteilt, dass am ersten Ladepunkt 45 kW und am zweiten Ladepunkt 55 kW bereitgestellt werden.

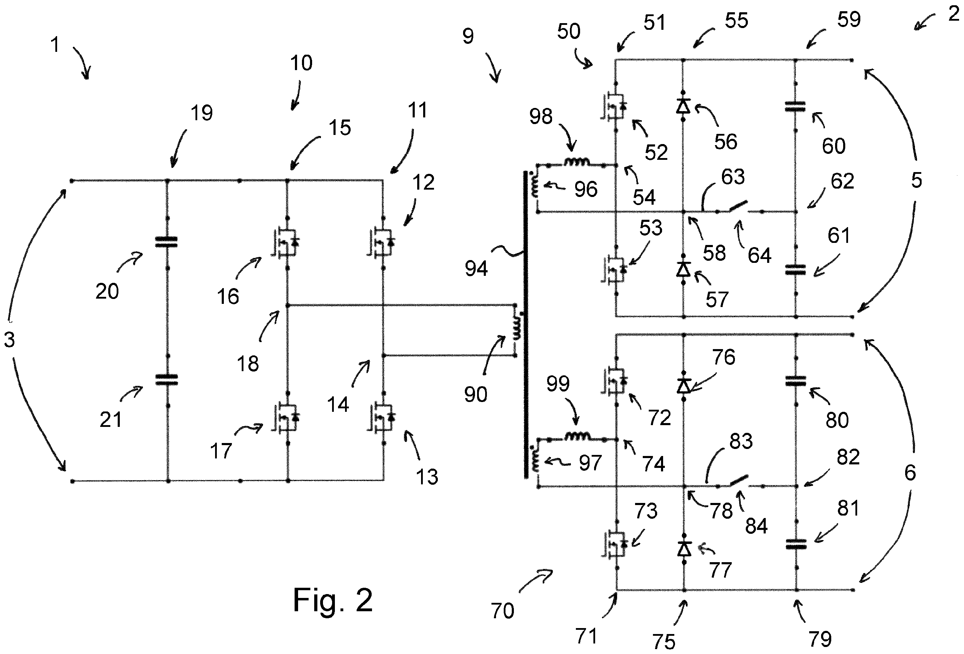

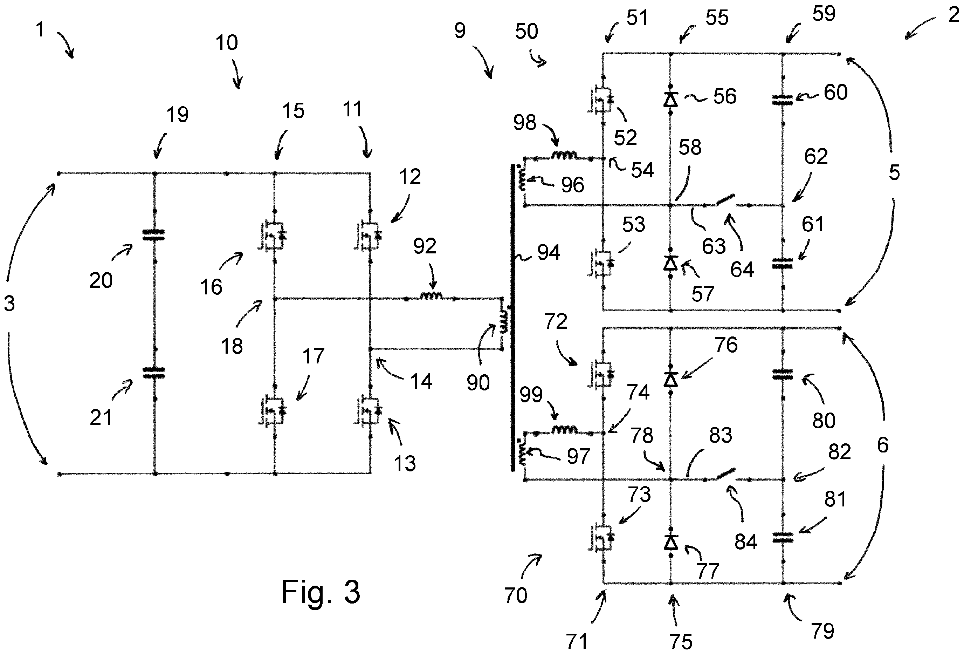

Fig. 2 und Fig. 3 zeigen Abwandlungen der ersten Ausführungsform des Gleichspannungswandlers nach Fig. 1. Die Varianten in den Fig. 2 und 3 unterscheiden sich durch die Anordnung der Induktivität des Transformatorsystems 9. Während die durch die Spule 92 gebildete Induktivität bei der ersten Ausführungsform gemäß Fig. 1 primärseitig angeordnet und der Eingangswicklung 90 zugeordnet ist, sieht der Gleichspannungswandler nach Fig. 2 vor, jeder Ausgangswicklung 96, 97 eine durch eine Spule 98, 99 gebildete Induktivität zuzuordnen. Der Gleichspannungswandler gemäß Fig. 3 kombiniert die Anordnung nach Fig. 1 und 2 dahingehend, dass sowohl primärseitig als auch sekundärseitig Spulen 92, 98, 99 eine Induktivität bereitstellen.

Gleiche Bauteile und Bauteilfunktionen sind durch gleiche Bezugszeichen gekennzeichnet.

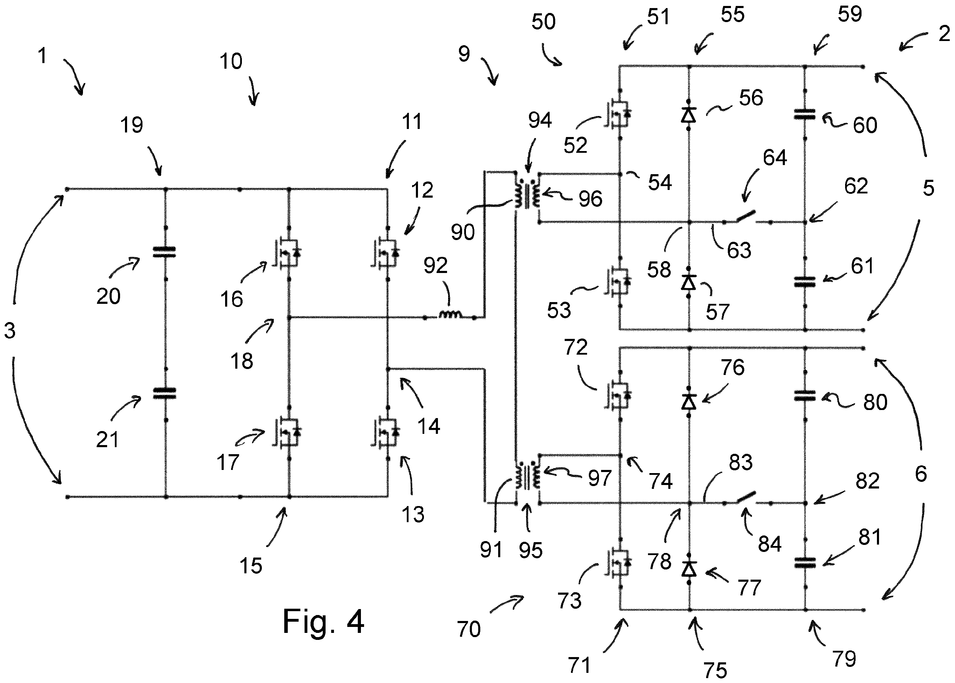

Eine zweite Ausführungsform des Gleichspannungswandlers der Versorgungsstation mit einem Eingang 3 und zwei Ladepunkten 5, 6 gemäß Fig. 4 sieht wie gehabt primärseitig den Wechselrichter 10 und sekundärseitig die erste Brückenschaltung 50 und die zweite Brückenschaltung 70 vor, welche in bekannter Weise den Ladepunkten 5, 6 zugeordnet sind und diese mit zwei Ausgangswicklungen 96, 97 des Transformatorsystems 9 verbinden.

Das Transformatorsystem 9 sieht zwei Eingangswicklungen 90, 91 vor, welche zueinander in Reihe geschaltet sind. Die in Reihe geschalteten Eingangswicklungen 90, 91 sind mit dem Mittelpunkt 14 des ersten Primärbrückenzweigs 11 einerseits und dem Mittelpunkt 18 des zweiten Primärbrückenzweigs 15 andererseits verbunden sind.

Eine erste Eingangswicklung 90 des Transformatorsystems 9 definiert zusammen mit der ersten Ausgangswicklung 96 und einem ersten Kern 94 einen ersten Transformator des Transformatorsystems 9. Analog bildet eine zweite Eingangswicklung 91 mit der zweiten Ausgangswicklung 97 und einem zweiten Kern 95 einen zweiten Transformator des Transformatorsystems 9. Die Aufteilung der an den Ladepunkten 5, 6 nachgefragten und am Eingang 3 versorgungs- beziehungsweise primärseitig bereitgestellten Leistung erfolgt in den Transformatoren des Transformatorsystems 9 stufenlos und bedarfsgerecht. Die Kopplung ist über die in Reihe geschalteten Eingangswicklungen 90, 91 realisiert.

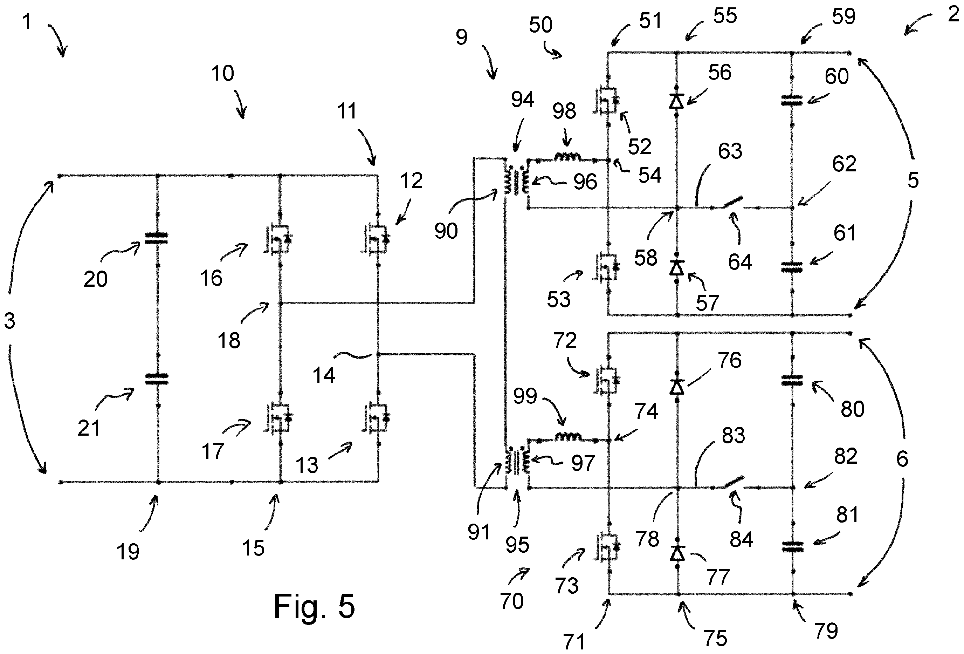

Wie gehabt sieht das zweite Ausführungsbeispiel des Gleichspannungswandlers nach Fig. 4 analog zu dem ersten Ausführungsbeispiel gemäß Fig. 1 primärseitig eine Spule 92 als Induktivität vor. Die Realisierung der Induktivität auf der Primärseite 1 ist dabei auch hier lediglich exemplarisch. Beispielhaft zeigt Fig. 5 eine Abwandlung der zweiten Ausführungsform des Gleichspannungswandlers nach Fig. 4 mit zwei den Ausgangswicklungen 96, 97 zugeordneten Spulen 98, 99 als Induktivitäten. Ansonsten entspricht der Aufbau des Gleichspannungswandlers nach Fig. 5 dem des Gleichspannungswandlers nach Fig. 4.

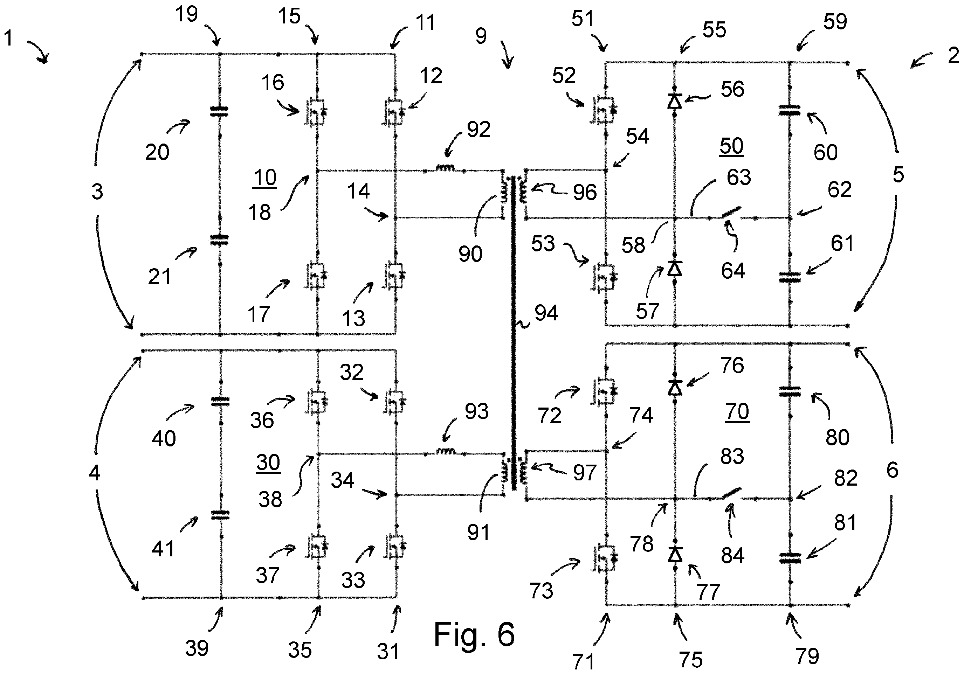

Eine dritte Ausführungsform eines Gleichspannungswandlers der erfindungsgemäßen Versorgungsstation mit zwei Eingängen 3, 4 und zwei Ladepunkten 5, 6 ist in Fig. 6 dargestellt. Das Transformatorsystem 9 sieht einen einzigen Transformator mit einer ersten Eingangswicklung 90, einer zweiten Eingangswicklung 91, einer ersten Ausgangswicklung 96 sowie einer zweiten Ausgangswicklung 97 vor. Für die Eingangs- und Ausgangswicklungen 90, 91, 96, 97 ist ein einziger, gemeinsamer Kern 94 vorgesehen. Eingangsseitig bilden eine der ersten Eingangswicklung 90 zugeordnete erste Spule 92 und eine der zweiten Eingangswicklung 91 zugeordnete zweite Spule 93 zwei Induktivitäten.

Die Ausgangswicklungen 96, 97 sind in bekannter Weise über die Brückenschaltungen 50, 70 mit den Ladepunkten 5, 6 verbunden. Ebenso ist der erste Wechselrichter 10 vorgesehen zum Verbinden eines ersten Eingangs 3 mit der ersten Eingangswicklung 90 des Transformatorsystems 9.

Weiterhin ist ein dem ersten Wechselrichter 10 baugleicher zweiter Wechselrichter 30 vorgesehen, welcher einen zweiten Eingang 4 und die zweite Eingangswicklung 91 des Transformatorsystems 9 verbindet. Der zweite Wechselrichter 30 sieht wie gehabt einen ersten Primärbrückenzweig 31 mit zwei in Reihe geschalteten Halbleiterschaltelementen 32, 33, einen zweiten Primärbrückenzweig 35 mit zwei Halbleiterschaltelementen 36, 37 und einen dritten Primärbrückenzweig 39 mit zwei in Reihe geschalteten Kondensatoren als Kapazitäten 40, 41 vor. Die zweite Eingangswicklung 91 des Transformatorsystems 9 ist wie gehabt mit einem Mittelpunkt 34 des ersten Primärbrückenzweigs 31 einerseits und einem Mittelpunkt 38 des zweiten Primärbrückenzweigs 35 verbunden.

Der Gleichspannungswandler kann eine auf der Primärseite 1 bereitgestellte Leistung bis zur Höhe einer Grenzladeleistung der Versorgungsstation im Transformatorsystem 9 variabel und stufenlos auf die Ladepunkte 5, 6 aufteilen. Eingangsseitig kann die Energie nun aber aus zwei unterschiedlichen, den Eingängen 3, 4 zugeordneten Quellen bereitgestellt werden.

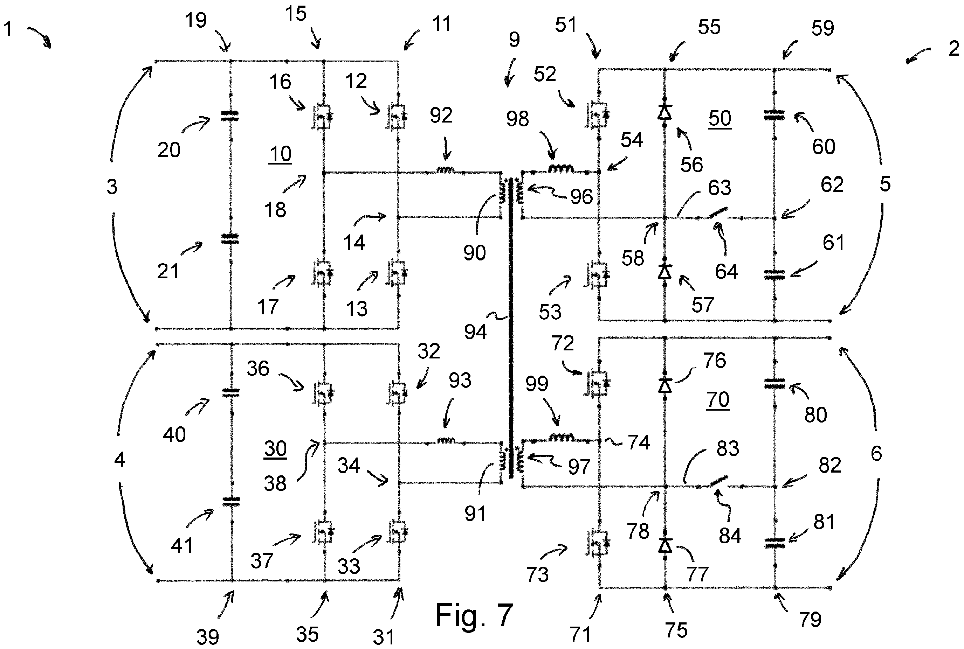

Eine Variante der dritten Ausführungsform des Gleichspannungswandlers nach Fig. 6 ist in Fig. 7 gezeigt. Die Variante sieht insgesamt vier Spulen 92, 93, 98, 99 vor, welche den Eingangs- und Ausgangswicklungen 90, 91, 96, 97 des Transformatorsystems 9 zugeordnet sind.

Lediglich beispielhaft ist in den Fig. 1 bis 7 jeweils ein Gleichspannungswandler für eine Versorgungsstation mit zwei Ladepunkten 5, 6 dargestellt. Die Versorgungsstation kann erfindungsgemäß auch drei oder mehr Ladepunkte vorsehen. Das Transformatorsystem 9 kann dabei eine, zwei oder mehr Eingangswicklungen 90, 91 aufweisen.

## Patentansprüche

1. Versorgungsstation zur Bereitstellung elektrischer Energie für elektrisch betreibbare Fahrzeuge umfassend eine Mehrzahl von Ladepunkten (5, 6) und einen Gleichspannungswandler mit einem Transformatorsystem (9) mit einem Transformator zur galvanischen Trennung einer Primärseite (1) des Gleichspannungswandlers von einer Sekundärseite (2) desselben, wobei das Transformatorsystem (9) primärseitig eine erste Eingangswicklung (90) vorsieht, die von einem ersten Wechselrichter (10) gespeist ist, wobei das Transformatorsystem (9) sekundärseitig eine erste Ausgangswicklung (96) und eine zweite Ausgangswicklung (97) vorsieht, wobei die erste Ausgangswicklung (96) einem ersten Ladepunkt (5) und die zweite Ausgangswicklung (97) einem zweiten Ladepunkt (6) zugeordnet sind und wobei zum Verbinden der ersten Ausgangswicklung (96) mit dem ersten Ladepunkt (5) eine erste Brückenschaltung (50) und zum Verbinden der zweiten Ausgangswicklung (97) mit dem zweiten Ladepunkt (6) eine zweite Brückenschaltung (70) vorgesehen sind mit jeweils einem ersten Sekundärbrückenzweig (51, 71) und einem zweiten Sekundärbrückenzweig (55, 75), wobei jeder erste Sekundärbrückenzweig (51, 71) zwei in Reihe verschaltete Halbleiterschaltelemente (52, 53, 72, 73) und jeder zweite Sekundärbrückenzweig (55, 75) zwei in Reihe verschaltete Halbleiterbauelemente (56, 57, 76, 77) vorsieht und wobei die erste Ausgangswicklung (96) mit einem Mittelpunkt (54) des ersten Sekundärbrückenzweigs (51) und einem Mittelpunkt (58) des zweiten Sekundärbrückenzweigs (55) der ersten Brückenschaltung (50) und die zweite Ausgangswicklung (97) mit einem Mittelpunkt (74) des ersten Sekundärbrückenzweigs (71) und einem Mittelpunkt (78) des zweiten Sekundärbrückenzweigs (75) der zweiten Brückenschaltung (70) verbunden sind.

2. Versorgungsstation nach Anspruch 1, **dadurch gekennzeichnet, dass** das Transformatorsystem (9) primärseitig mindestens eine zweite Eingangswicklung (91) vorsieht.

3. Versorgungsstation nach Anspruch 2, **dadurch gekennzeichnet, dass** die erste Eingangswicklung (90) und die zweite Eingangswicklung (91) zueinander in Reihe verschaltet sind und der erste Wechselrichter (10) die beiden Eingangswicklungen (90, 91) speist.

4. Versorgungsstation nach Anspruch 2, **dadurch gekennzeichnet, dass** primärseitig ein zweiter Wechselrichter (30) vorgesehen ist, wobei der zweite Wechselrichter (30) die zweite Eingangswicklung (91) speist.

5. Versorgungsstation nach einem der Ansprüche 2 bis 4, **dadurch gekennzeichnet, dass** die Anzahl der Eingangswicklungen (90, 91) zu der Anzahl der Ausgangswicklungen (96, 97) korrespondiert und/oder dass für jeweils eine Eingangswicklung (90, 91) und eine Ausgangswicklung (96, 97) ein einzelner Kern (94, 95) vorgesehen ist.

6. Versorgungsstation nach einem der Ansprüche 1 bis 5, **dadurch gekennzeichnet, dass** wenigstens eine Brückenschaltung (50, 70) einen dritten Sekundärbrückenzweig (59, 79) mit einem Kondensator (60, 61, 80, 81) vorsieht.

7. Versorgungsstation nach Anspruch 6, **dadurch gekennzeichnet, dass** der dritte Sekundärbrückenzweig (50, 70) zwei in Reihe geschaltete Kondensatoren (60, 61, 80, 81) vorsieht und dass zwischen dem Mittelpunkt (58, 78) des zweiten Sekundärbrückenzweigs (55, 75) und einem Mittelpunkt (62, 82) des dritten Sekundärbrückenzweigs (59, 79) ein Verbindungsleitungsstrang (63, 83) vorgesehen ist, wobei der Verbindungsleitungsstrang (63, 83) ein Schaltelement (64, 84) vorsieht zum wahlweisen Herstellen und Trennen einer Verbindung zwischen diesen Mittelpunkten (58, 62, 78, 82).

8. Versorgungsstation nach einem der Ansprüche 1 bis 7, **dadurch gekennzeichnet, dass** der zweite Sekundärbrückenzweig (55, 75) Dioden (56, 57, 76, 77) als Halbleiterbauelemente vorsieht.

9. Versorgungsstation nach einem der Ansprüche 1 bis 8, **dadurch gekennzeichnet, dass** der primärseitige Wechselrichter (10, 30) eine Vollbrücke vorsieht mit zwei zueinander parallelen Primärbrückenzweigen (11,15, 31, 35) und mit zwei in Reihe verschalteten Halbleiterschaltelementen (12, 13, 16, 17, 32, 33, 36, 37) je Primärbrückenzweig (11,15, 31, 35) und dass die primärseitige Eingangswicklung (90, 91) des Transformatorsystems (9) mit einem Mittelpunkt (14) eines ersten Primärbrückenzweigs (11) einerseits und einem Mittelpunkt (18) eines zweiten Primärbrückenzweigs (15) anderseits verbunden ist.

10. Versorgungsstation nach einem der Ansprüche 1 bis 9, **dadurch gekennzeichnet, dass** wenigstens einer und bevorzugt allen Eingangswicklungen (90, 91) des Transformatorsystems (9) eine Spule (92, 93) zugeordnet ist.

11. Versorgungsstation nach einem der Ansprüche 1 bis 10, **dadurch gekennzeichnet, dass** wenigstens einer und bevorzugt allen Ausgangswicklungen (96, 97) des Transformatorsystems (9) eine Induktivität (98, 99) zugeordnet ist.
